(19) Europäisches Patentamt
European Patent Office
Office européen des brevets

(11) Numéro de publication: **0 038 231**
**A1**

(12) **DEMANDE DE BREVET EUROPEEN**

(21) Numéro de dépôt: **81400422.2**

(22) Date de dépôt: **18.03.81**

(51) Int. Cl.³: **H 02 J 7/16**, H 02 J 7/24

(30) Priorité: **28.03.80 FR 8007007**
**31.10.80 FR 8023290**

(43) Date de publication de la demande: **21.10.81**
**Bulletin 81/42**

(84) Etats contractants désignés: **AT BE CH DE GB IT LI LU NL SE**

(71) Demandeur: **Mongault, Jacques Henri Claude, 82, rue Dutot, F-75015 Paris (FR)**

(72) Inventeur: **Mongault, Jacques Henri Claude, 82, rue Dutot, F-75015 Paris (FR)**

(74) Mandataire: **Loyer, Pierre et al, Cabinet Pierre Loyer 18, rue de Mogador, F-75009 Paris (FR)**

(54) **Dispositif de commande automatique de mise en service des alternateurs des véhicules automobiles.**

(57) L'invention concerne la mise en service des alternateurs utilisés en particulier par les véhicules automobiles. Le dispositif comprend un comparateur de tension temporisé 8, recevant la tension de la batterie électrique 12 ou une tension connue qui en dépend, et commandant, si cette tension est égale ou inférieure à une tension prédéterminée, la fermeture d'un interrupteur à auto-maintien 9 disposé en série sur le circuit d'alimentation de l'enroulement d'excitation 23 de l'alternateur 1, afin de provoquer ainsi sa mise en service.

R1
R2
R3
R4
R9

EP 0 038 231 A1

ACTORUM AG

Dispositif de commande automatique de mise en service des alternateurs de véhicules automobiles.

La présente invention concerne la mise en service des alternateurs utilisés en particulier par les véhicules automobiles.

On sait qu'aujourd'hui la plupart des véhicules automobiles possèdent un alternateur pour alimenter en électricité les divers appareillages qui les composent. L'alternateur est généralement associé à un régulateur de tension qui agit sur l'alimentation de son enroulement d'excitation, afin de maintenir entre ses bornes de sortie, une tension prédéterminée et pratiquement constante, quelle que soit l'intensité du courant débité.

Cette tension que l'alternateur applique aux bornes de la batterie est en moyenne supérieure d'environ 2 volts à la tension nominale qui la caractérise. Cet écart a principalement pour but de maintenir la batterie à pleine charge, mais la plupart du temps cela entraîne malheureusement une surcharge de cet accumulateur électrique, avec tous les inconvénients qui en découlent tant sur le plan de son entretien que sur le plan de sa longévité.

On a constaté par ailleurs qu'en temps ordinaire, la consommation d'électricité indispensable au seul fonctionnement de l'allumage du moteur, peut fort bien et pour lontemps n'être assurée que par la batterie uniquement.

BAD ORIGINAL

On en a déduit que l'entraînement permanent de l'alternateur par le moteur du véhicule ainsi que la production constante d'une tension électrique entre ses bornes de sortie engendrent un gaspillage de la consommation de carburant du véhicule. C'est ainsi qu'il a paru intéressant de créer un dispositif de commande de mise en service des alternateurs des véhicules automobiles.

Un des buts de l'invention est de faire en sorte que l'alternateur ne soit mis en service qu'à partir du moment où cela devient indispensable.

Un des buts de l'invention est que cette mise en service soit rendue automatique.

Un des buts de l'invention est de mieux exploiter la batterie électrique, d'accroître sa longévité tout en simplifiant son entretien.

Un des buts de l'invention est de diminuer la consommation de carburant des véhicules, plus particulièrement sur les parcours urbains.

Un des buts de l'invention est d'améliorer le rendement global des moteurs des véhicules, principalement lors de leur fonctionnement au ralenti.

Un des buts de l'invention est d'utiliser les possibilités qu'offre l'électronique pour réaliser un dispositif fiable, de faible encombrement et peu coûteux.

Le dispositif selon l'invention est caractérisé en ce qu'il comprend un comparateur de tension temporisé, recevant la tension de la batterie électrique ou une tension connue qui en dépend, et commandant, si cette tension est égale ou inférieure à une tension prédéterminée, la fermeture d'un interrupteur à auto-maintien disposé en série sur le circuit d'alimentation de l'enroulement d'excitation de l'alternateur, afin de provoquer ainsi sa mise en service.

BAD ORIGINAL

Selon une forme avantageuse de réalisation conforme à l'invention, le dispositif comprend un pont diviseur constitué de résistances en série, une diode zener mise en série avec une résistance de polarisation, un condensateur polarisé disposé en contre réaction sur un amplificateur opérationnel dont la sortie est reliée par une résistance à la gâchette d'un thydristor de puissance pouvant conduire le courant d'alimentation de l'enroulement d'excitation de l'alternateur.

Suivant ses propres caractéristiques, le thyristor présente l'avantage de rester bloqué à l'état passant lorsqu'il est amorcé, tant que subsiste un courant anodique, même si le courant de gâchette vient à disparaître. On est donc assuré avec ce composant, que lorsque le dispositif aura provoqué la mise en service de l'alternateur, faute d'une tension suffisante aux bornes de la batterie, il n'interviendra pas pour en arrêter le fonctionnement.

Si l'on utilise d'autres moyens, dont on donne plus loin des exemples de réalisation pour conduire le courant de l'enroulement d'excitation de l'alternateur, ces moyens devront rester auto-maintenus lorsqu'ils seront devenus passants, tant que leur dispositif sera alimenté par une tension quelconque.

Suivant une forme de réalisation avantageuse du dispositif, le circuit imprimé, sur lequel sont implantés les composants dont certains comportent des moyens de dissipation calorifique, est protégé par un boîtier ventilé et relié à la masse métallique du véhicule à l'aide d'une patte de fixation conductrice.

Selon une forme de réalisation préférentielle lorsque la borne négative de la batterie est mise directement à la masse métallique du véhicule, la charge que constitue l'enroulement d'excitation de l'alternateur est placée en aval de la cathode du thyristor et l'alimentation positive du comparateur de tension est reliée à l'anode du

BAD ORIGINAL

thyristor.

Selon une autre forme de réalisation préférentielle lorsque la borne positive de la batterie est mise directement à la masse métallique du véhicule, la charge que constitue l'enroulement d'excitation de l'alternateur est placée en amont de l'anode du thyristor et l'alimentation négative du comparateur de tension est reliée à la cathode du thyristor.

Suivant ces deux types de branchements dépendant de la polarité de la batterie mise à la masse du véhicule, la mise sous tension du dispositif présente l'avantage d'être obtenue simultanément avec la mise sous tension du circuit électrique du véhicule, au moyen de la clef de contact.

L'installation sur un véhicule du dispositif approprié ne nécessite que sa fixation sur la masse du véhicule, et la connexion par son intermédiaire du circuit d'alimentation de l'enroulement d'excitation de l'alternateur.

Pour satisfaire au principe de fonctionnement du dispositif, les valeurs des résistances du pont diviseur sont déterminées de telle manière que leur rapport permet d'obtenir à partir de la tension de la batterie, ou d'une tension connue qui en dépend, une tension proche de la tension de référence définie par la diode zener, et que ces tensions sont appliquées aux entrées de l'amplificateur opérationnel, afin que sa sortie alimente à travers une résistance la gâchette du thyristor, par une tension d'amorçage, lorsque la tension de la batterie est égale ou devient inférieure à la valeur pour laquelle on a défini la mise en service de l'alternateur.

Afin de neutraliser les effets d'une brève mais importante chute de tension, comme cela se produit aux bornes de la batterie lors de la mise en marche du moteur au moyen du démarreur électrique, et dont la conséquence serait l'enclenchement intempestif du dispositif, il est disposé en contre

réaction sur l'amplificateur opérationnel un condensateur polarisé. La valeur de la capacité de ce condensateur est déterminée de telle sorte que la temporisation obtenue ne soit malgré tout pas trop longue, car il est utile qu'en cas d'un démarrage difficile, où le démarreur est longuement sollicité, le dispositif s'enclenche afin que l'alternateur recharge la batterie.

Si l'on souhaite obtenir l'enclenchement du dispositif à partir d'un seuil de tension très précis, on peut très bien disposer parmi les résistances du pont diviseur, un potentiomètre ajustable. Dans la pratique, on obtient une précision suffisante du seuil de la tension d'enclenchement du dispositif en utilisant une diode zener et deux résistances dont les valeurs ont une précision de plus ou moins 1 %.

Selon une forme de réalisation conforme à l'invention, l'interrupteur qui établi le passage du courant d'alimentation de l'enroulement d'excitation de l'alternateur est réalisé au moyen d'un thyristor commandant un transistor de puissance.

Selon une autre forme de réalisation conforme à l'invention, l'interrupteur qui établi le passage du courant d'alimentation de l'enroulement d'excitation de l'alternateur est réalisé au moyen d'un transistor commandant un relai électromécanique auto-alimenté dans sa position de travail.

A l'examen de la description des différents cas de fonctionnement qui vont suivre, on comprendra mieux, que lorsque le dispositif aura détecté une faiblesse de la tension aux bornes de la batterie, aussi bien avant la mise en marche du moteur, pendant son démarrage ou durant son fonctionnement, il assurera automatiquement la mise en service de l'alternateur et le maintiendra en service tant que le contact qui alimente le circuit électrique du véhicule sera établi.

BAD ORIGINAL

1). Si après avoir mis le contact du véhicule, la tension reçue par le comparateur de tension est égale ou inférieure au seuil de tension défini pour l'enclenchement du dispositif, l'alternateur sera mis en service et débitera comme à l'ordinaire pour recharger la batterie dès que le moteur sera mis en marche.

2). Si la tension reçue par le comparateur de tension est très légèrement supérieure au seuil de tension défini pour l'enclenchement du dispositif, mais que faute d'une charge suffisante de la batterie, il se produit une difficulté de démarrage du moteur, se traduisant par un fonctionnement prolongé du démarreur, la temporisation du comparateur de tension sera insuffisante pour neutraliser la chute de tension qui en découle, et le dispositif enclenchera la mise en service de l'alternateur..

3). Si la batterie est moyennement chargée et que le démarrage du moteur ne présente pas de difficulté, la temporisation du comparateur de tension sera suffisante pour neutraliser l'effet du démarreur électrique, et le dispositif ne conduira pas le courant destiné à l'alimentation de l'enroulement d'excitation de l'alternateur ainsi mis hors service.

4). Si la batterie est très bien chargée et que sa tension soit très nettement supérieure au seuil de tension défini pour l'enclenchement du dispositif, de nombreux trajets pourront être effectués sans que l'alternateur ne soit mis en service.

Le moteur du véhicule n'aura pratiquement pas d'effort à fournir pour entraîner l'alternateur dépourvu d'excitation et sans débit. Cela se traduira par un gain sur le régime de ralenti du moteur que l'on pourra corriger.

On obtient ainsi avec le dispositif une économie réelle sur la consommation de carburant d'autant que, une partie de ce carburant n'est plus convertie en électricité, et l'on remarque une souplesse accrue en particulier pour les bas régimes du moteurs.

5). Si pendant l'utilisation du véhicule la tension de la batterie baisse pour atteindre le seuil d'enclenchement du dispositif, par le fait de l'usage prolongé des différents appareillages électriques du véhicule, l'alternateur sera automatiquement mis en service par le dispositif jusqu'à la coupure du circuit électrique du véhicule, c'est-à-dire jusqu'à son arrêt complet.

D'autres caractéristiques et avantages de l'invention apparaîtront plus clairement à la lecture des descriptions des différentes formes de réalisation qui vont suivre, données à titre d'exemples non limitatifs et représentées par les dessins annexés dans lesquels :

La figure 1 est une représentation du schéma électrique du dispositif dans lequel la borne négative de la batterie est mise à la masse du véhicule ;

La figure 2 est une représentation du schéma électrique du dispositif dans lequel la borne positive de la batterie est mise à la masse du véhicule ;

La figure 3 est un détail d'un schéma où se trouve introduite, dans le pont diviseur, une résistance ajustable.

La figure 4 est une représentation en coupe d'un dispositif selon une forme de réalisation ;

La figure 5 est une représentation d'un dispositif fixé sur un alternateur ;

La figure 6 est une représentation d'un schéma électrique d'un dispositif qui établi le passage du courant destiné à l'enroulement d'excitation de l'alternateur par l'intermédiaire d'un transistor de puissance ;

BAD ORIGINAL

La figure 7 est une représentation d'un schéma électrique d'un dispositif qui établi le passage du courant destiné à l'enroulement d'excitation de l'alternateur par l'intermédiaire d'un relai électromécanique auto-alimenté dans sa position de travail ;

La figure 8 est une représentation, vue de dessus, d'un dispositif ;

La figure 9 est une représentation du schéma électrique du dispositif amélioré ;

La figure 10 est une représentation du dispositif constituant un circuit intégré pourvu d'un convecteur calorifique;

La figure 11 est une représentation du dispositif constituant un circuit à couche épaisse pourvu d'un convecteur calorifique;

La figure 12 est une représentation du dispositif intégré au circuit à couche épaisse constitutif d'un régulateur de tension d'alternateur.

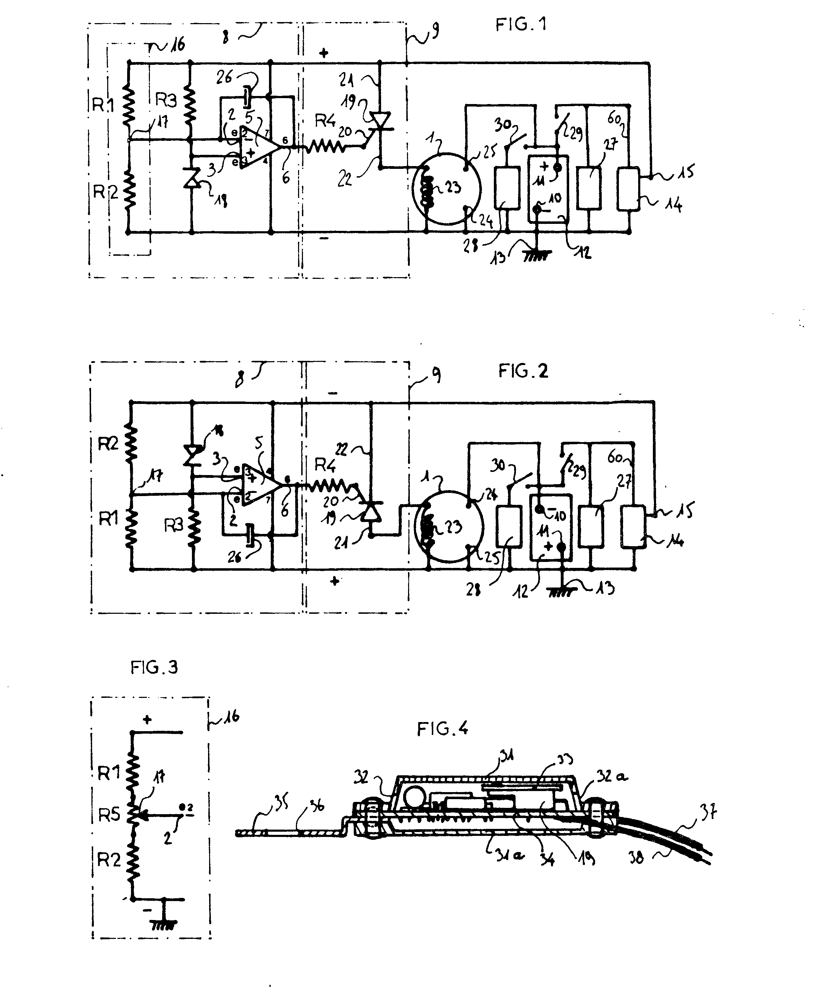

Sur la figure 1 qui représente le schéma électrique d'un dispositif conforme à l'invention, dans lequel la borne négative 10 de la batterie électrique 12 est reliée à la masse métallique 13 du véhicule, l'interrupteur à auto-maintien 9 est constitué par un thyristor de puissance 19. La sortie 15 du régulateur de tension 14 est reliée à l'anode 21 du thydristor 19 et alimente par une tension positive le comparateur de tension 8, lorsque le circuit électrique principal 27 du véhicule est mis sous tension au moyen du contact 29.

Le point milieu 17 du pont diviseur 16 constitué par les résistance R1 et R2, mises en série, est relié à l'entrée inverseuse 2 de l'amplificateur opérationnel 5. La diode zener 18 associée à sa résistance de polarisation R3, fournie la tension de référence à l'entrée non inverseuse 3 de l'amplificateur opérationnel 5 lorsque le comparateur de tension 8 est alimenté. L'action du comparateur de tension 8 sur l'interrupteur à auto-maintien 9 est temporisée par le condensateur 26 disposé en contre-réaction sur l'amplificateur opérationnel 5 dont la sortie 6 peut commander par l'intermédiaire de la résistance de limitation de courant R4 la gâchette 20 du thyristor 19.

La cathode 22 du thyristor de puissance 19 est reliée à l'enroulement d'excitation 23 de l'alternateur 1, entre les bornes de sorties 24 et 25,duquel se trouvent mis en parallèle, le circuit électrique principal 27, le régulateur de tension 14 et la batterie 12.

Dans ce schéma électrique et ceux représentés par les figures 2, 6 et 7, les circuits auxiliaires et les interrupteurs électriques qui les commandent, sont respectivement repérés par les indices 28 et 30.

Sur la figure 2 qui représente le schéma électrique d'un dispositif conforme à l'invention, dans lequel la borne positive 11 de la batterie électrique 12 est reliée à la masse métallique 13 du véhicule, l'enroulement d'excitation 23 de l'alternateur 1 est situé en amont de l'anode 21 du thyristor 19. L'alimentation négative du comparateur de tension 8 et la cathode 22 du thyristor de puissance 19 sont reliées à la sortie 15 du régulateur de tension 14.

Sur la figure 3 qui représente en détail un pont diviseur 16 permettant le réglage précis de la valeur du seuil de tension d'enclenchement du dispositif, les résistances R1 et R2 sont disposées de part et d'autre d'un potentiomètre ajustable R5.

BAD ORIGINAL

Sur la figure 4 qui représente en coupe un dispositif conforme à l'invention, le boîtier 31 ventilé par les ouvertures 32, protège le circuit imprimé 34 sur lequel sont implantés les composants, dont le thyristor 19 pourvu d'un convecteur 33. La patte métallique de fixation 35 comporte un perçage 36 servant au montage du dispositif sur la masse 13 du véhicule. Au même titre que les connexions 37 et 38, cette patte de fixation 35 est reliée au circuit imprimé 34.

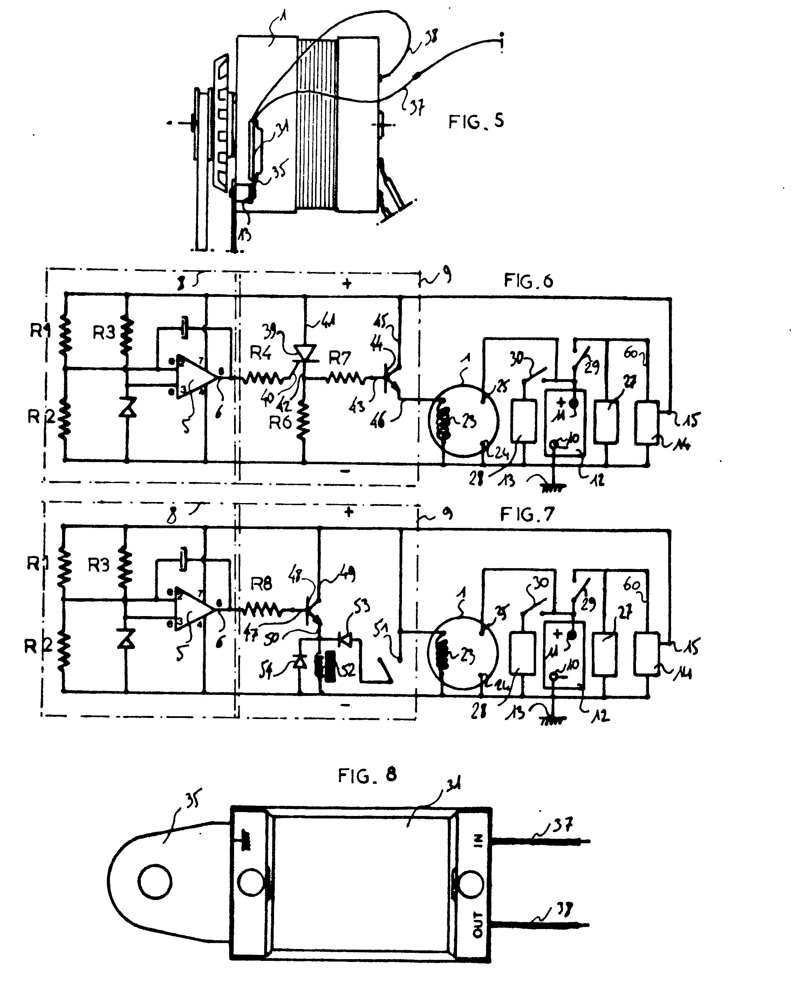

Sur la figure 5 qui représente la fixation d'un dispositif conforme à l'invention sur un alternateur, on voit bien que la masse 13 est directement prise sur la carcasse de l'alternateur 1 par l'intermédiaire de la patte de fixation 35.

Sur la figure 6 qui représente le schéma électrique, d'un dispositif conforme à l'invention, dans lequel l'interrupteur à auto-maintien 9 est constitué d'un thyristor 39 commandant un transistor de puissance 44, la sortie 6 de l'amplificateur opérationnel 5 commande par l'intermédiaire de la résistance de limitation de courant R4, la gâchette 40 du thyristor 39 qui agit, lorsqu'il se trouve amorcé, sur la base 43 d'un transistor de puissance 44 devenant à son tour passant.

Les résistances R6 et R7 représentent les résistances de charge et de limitation de courant qui sont nécessaires au fonctionnement du thyristor 39 et du transistor de puissance 44. L'anode 41 du thyristor 39 et le collecteur 45 du transistor de puissance 44, sont reliés à la sortie 15 du régulateur de tension 14. La borne négative 10 de la batterie 12 est reliée à la masse 13 du véhicule, comme la cathode 42 du thyristor 39 par l'intermédiaire de sa résistance de charge R6, et l'enroulement d'excitation 23 de l'alternateur à l'émetteur 46 du transistor de puissance 44.

Sur la figure 7 qui représente le schéma électrique,d'un dispositif conforme à l'invention, dans lequel l'interrupteur à auto-maintien 9 est constitué d'un transistor 48 commandant un relai électromécanique 52 auto-alimenté dans sa position de travail, la sortie 6 de l'amplificateur opérationnel 5 agit par l'intermédiaire de la résistance de limitation de courant R8 sur la base 47 d'un transistor 48 dont l'émetteur 50 est relié au bobinage du ralai électromécanique 52, auto-alimenté dans sa position de travail. Le contact de travail 51 est d'une part relié avec le collecteur 49 du transistor 48, à la sortie 15 du régulateur de tension 14, et d'autre part, à l'enroulement d'excitation 23 de l'alternateur 1. Une diode de protection 53 est disposée entre le point commun des contacts d'utilisation du relai 52 et l'entrée de son bobinage, de même qu'une autre diode de protection 54 est disposée en parallèle avec le bobinage dont la sortie est reliée à la masse 13 du véhicule, comme la borne négative 10 de la batterie électrique 12 du véhicule.

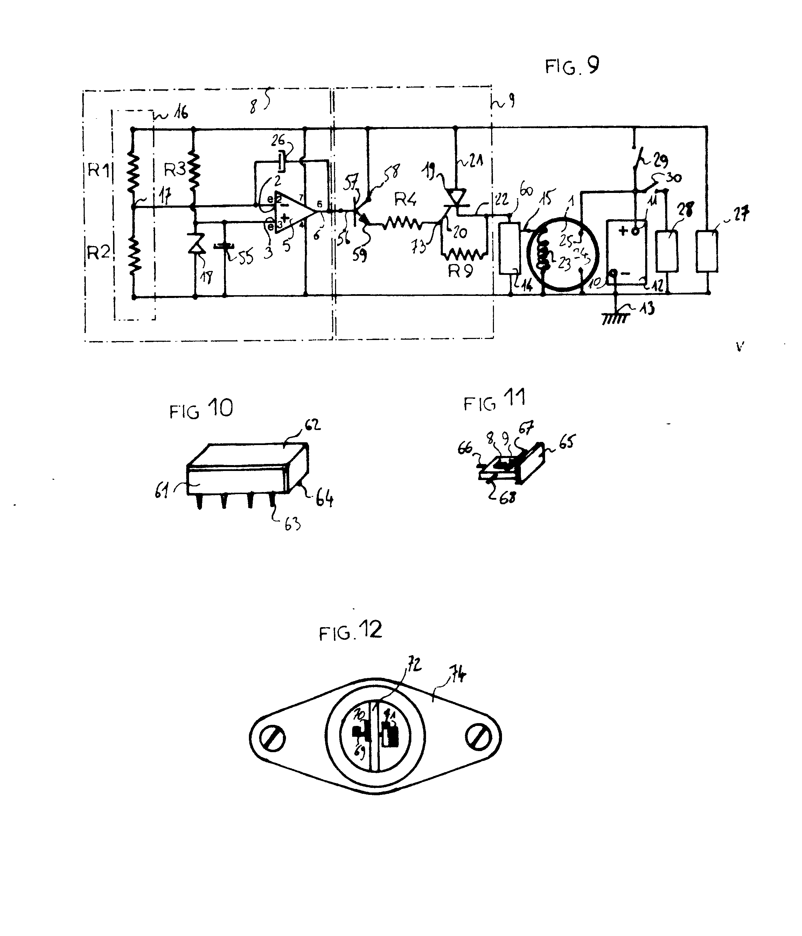

Sur la figure 8, qui représente une vue de dessus d'un dispositif conforme à l'invention, la patte de fixation 35 se trouve en opposition avec les connexions 37 et 38.

Selon une forme de réalisation conforme au schéma représenté à la figure 1, les valeurs respectives des résistances R1, R2, R3, R4 sont de 11, 10, 1, 2 kilo ohms, et le condensateur polarisé 26 a pour capacité 10 microfarads.

Pour que d'une part le dispositif, dont le but final est de produire à moindre coût l'électricité utilisée par le véhicule soit plus fiable et plus performant, compte tenu de la dispersion des caractéristiques de chacun de ses composants, et d'autre part, afin qu'il puisse plus facilement s'intégrer aux alternateurs qui de plus en plus possèdent un régulateur de tension incorporé, il a paru intéressant de mettre au point le dispositif perfectionné dont la description suit.

BAD ORIGINAL

Les perfectionnements de ce dispositif consistent entre autres en ce qu'un condensateur polarisé 55 soit mis en parallèle avec la diode zener 18, un transistor NPN 57 soit disposé entre la sortie 6 de l'amplificateur opérationnel 5 et la gâchette 20 du thyristor 19 et que des résistances de limitation de courant R4 et R9 relient l'émetteur 59 du transistor NPN 57 et la cathode 22 du thyristor 19 à la gâchette 20.

Au même titre que l'anode 21 du thyristor 19, le collecteur 58 du transistor NPN 57 reçoit directement le courant d'alimentation du dispositif, tandis que la base 56 du transistor NPN 57 est directement reliée à la sortie du comparateur de tension 8.

Ces perfectionnements ont les buts suivants :

- d'éviter un fonctionnement aléatoire au moment de la mise sous tension du dispositif,

- de permettre au dispositif de fonctionner correctement même si la tension qu'il détecte est très faible,

- d'éviter que la dispersion des caractéristiques des composants du dispositif oblige à un quelconque tri ou réglage de ces derniers pour en garantir les performances,

- de réaliser le dispositif sous la forme d'un circuit intégré ou sous la forme d'un circuit à couche épaisse.

Sur la figure 9 qui représente le schéma électrique d'un dispositif amélioré, disposé en série sur le circuit d'alimentation du régulateur de tension 14, l'interrupteur à auto-maintien 9 est constitué par un transistor NPN 57, deux résistances de limitation de courant R4, R9 et un thyristor de puissance 19. L'anode 21 du thyristor 19 et le collecteur 58 du transistor NPN 57, ainsi que l'alimentation du comparateur de tension 8, sont reliés à la borne positive 11 de la batterie 12 par l'intermédiaire du contact 29. La gâchette 20 du thyristor 19 est reliée au point commun 73 des résistances R4 et R9, mises en série entre l'émetteur 59 du transistor NPN 57 et la cathode 22 du thyristor 19, elle-même directement reliée à l'entrée 60 du régulateur de tension 14, dont la sortie 15 est susceptible d'~~alimenter~~ l'enroulement d'excitation 23 de l'alternateur 1.

BAD ORIGINAL

Le comparateur de tension 8 est constitué par un amplificateur opérationnel 5, sur lequel est disposé en contre-réaction un condensateur 26, un pont diviseur 16 qui comprend les résistances R1 et R2 mises en série, et dont le point milieu 17 est relié à l'entrée inverseuse 2 de l'amplificateur opérationnel 5, une diode zener 18 mise en parallèle avec un condensateur polarisé 55, et en série avec une résistance de polarisation R3, afin de fournir une tension de référence à l'entrée non inverseuse 3 de l'amplificateur opérationnel 5, lorsque le comparateur de tension 8 est alimenté en courant. La sortie 6 de l'amplificateur opérationnel 5, et par conséquent la sortie du comparateur de tension 8, est relié directement à la base 56 du transistor NPN 57, afin de piloter l'interrupteur à auto-maintien 9 selon ce que l'on a bien voulu prédéterminer.

Dans ce schéma électrique, la borne négative 10 de la batterie 12 est reliée à la masse métallique 13 du véhicule, les circuits auxiliaires 28 avec les interrupteurs 30 qui les commandent, ainsi que le circuit électrique principal 27, sont disposés en parallèle entre les bornes de sorties 24 et 25 de l'alternateur 1.

A titre indicatif, on peut donner comme valeurs pour les résistances R3, R4 et R9, 3, 3 K, 220 et 47 ohms, et pour les condensateurs 26 et 55, les valeurs 10 yf 40v, et 47 yf 10v.

Sur la figure 10 qui représente un dispositif complètement intégré, le boîtier 61 du circuit laisse apparaître un élément convecteur 62, ainsi que les pattes 63 et 64 de connexions extérieures.

Sur la figure 11 qui représente un dispositif réalisé suivant la technologie des circuits à couche épaisse, l'un au moins des éléments de structures internes 8 et 9, correspondant respectivement au comparateur de tension et à l'interrupteur à auto-maintien, est relié à un élément 65 de dissipation

BAD ORIGINAL

calorifique. Les connexions extérieures du dispositif se faisant aux points 66, 67 et 68.

Sur la figure 12 représentant un dispositif intégré à un régulateur de tension réalisé suivant la technologie des circuits à couche épaisse, les éléments de structures internes 69 et 70, correspondant respectivement au comparateur de tension et à l'interrupteur à auto-maintien sont liés au boîtier 74, faisant office de convecteur 72 calorifique, et de support des éléments de structures internes 71 propre au régulateur de tension.

Il est évident que sans sortir du cadre de l'invention d'autres moyens auraient pu être prévus pour parvenir aux même fins.

L'invention comprend donc tous les moyens constituant des équivalents techniques de ceux qui viennent d'être présentés, considérés séparément ou en combinaison et mis en oeuvre dans le cadre des revendications qui suivent.

Revendications de brevet.

I.Dispositif de commande automatique de mise en service des alternateurs des véhicules automobiles,caractérisé en ce qu'il comprend un comparateur de tension 8,temporisé,recevant la tension de la batterie électrique I2, ou une tension connue qui en dépend,et commandant,si cette tension est égale ou inférieure à une tension prédéterminée,la fermeture d'un interrupteur à auto-maintien 9,disposé en série sur le circuit d'alimentation de l'enroulement d'excitation 23,de l'alternateur I,afin de provoquer ainsi sa mise en service.

2.Dispositif selon la revendication I,caractérisé en ce qu'il comprend un pont diviseur I6,constitué de résistances RI,R2,en série,une diode zener I8, mise en série avec une résistance de polarisation R3,un condensateur polarisé 26,disposé en contre-réaction sur un amplificateur opérationnel 5,dont la sortie 6,est reliée par une résistance R4,à la gachette 20,d'un thyristor de puissance I9,pouvant conduire le courant d'alimentation de l'enroulement d'excitation 23,de l'alternateur I.

3.Dispositif selon l'une quelconque des revendications précédentes,caractérisé en ce que la coupure du courant d'alimentation de l'enroulement d'excitation23, de l'alternateur I,désamorce l'interrupteur à auto-maintien 9.

4.Dispositif selon l'une quelconque des revendications précédentes,caractérisé en ce que lorsqu'il a été amorcé,l'auto-maintien de l'interrupteur 9,est assuré,tant que le comparateur de tension 8,est alimenté par une tension quelconque.

5.Dispositif selon l'une quelconque des revendications précédentes,caractérisé en ce que le circuit imprimé 34,sur lequel sont implantés les composants,est relié à la masse métallique I3,du véhicule à l'aide d'une patte de fixation 35, conductrice

6.Dispsitif selon l'une quelconque des revendications précédentes,caractérisé en ce que certains composants comportent des moyens de dissipation calorifique 33,et que l'ensemble des composants est protégé par un boîtier 3I,ventilé.

7.Dispositif selon l'une quelconque des revendications précédentes,caractérisé

en ce que lorsque la charge que constitue l'enroulement d'excitation 23,de l'alternateur I,est placée en aval de la cathode 22,du thyristor I9,l'alimentation positive du comparateur de tension 8,est reliée à l'anode 2I,du thyristor I9.

8.Dispositif selon l'une quelconque des revendications I à 6,caractérisé en ce que lorsque la charge que constitue l'enroulement d'excitation 23,de l'alternateur I,est placée en amont de l'anode 2I,du thyristor I9,l'alimentation négative du comparateur de tension 8,est reliée à la cathode 22,du thyristor I9.

9.Dispositif selon l'une quelconque des revendications précédentes,caractérisé en ce que sa mise sous tension est obtenue simultanément avec la mise sous tension du circuit électrique du véhicule,au moyen de la clef de contact 29.

IO.Dispositif selon l'une quelconque des revendications précédentes,caractérisé en ce que la tension délivrée par le point milieu I7,du pont diviseur I6,et la tension fournie par la diode zener I8,sont respectivement appliquées à l'entrée inverseuse 2,et à l'entrée non inverseuse 3,de l'amplificateur opérationnel 5.

II.Dispositif selon l'une quelconque des revendications précédentes,caractérisé en ce que le pont diviseur I6,comprend un potentiomètre ajustable R5.

I2.Dispositif selon l'une quelconque des revendications précédentes,caractérisé en ce qu'un condensateur polarisé 26,est disposé en contre-réaction sur l'amplificateur opérationnel 5.

I3.Dispositif selon la revendication I,caractérisé en ce que l'interrupteur à auto-maintien 9,est réalisé au moyen d'un thyristor 39,commandant un transistor de puissance 44.

I4.Dispositif selon la revendication I,caractérisé en ce que l'interrupteur à auto-maintien 9,est réalisé au moyen d'un transistor 48,commandant un relai électromécanique 52 auto-alimenté dans sa position de travail.

I5.Dispositif selon la revendication I,caractérisé en ce qu'il comprend un pont diviseur I6,fait de résistances RI,R2,mises en série,une diode zener I8,mise en parallèle avec un condensateur polarisé 55,et en série avec une résistance de polarisation R3,un condensateur polarisé 26,disposé en contre-réaction sur un amplificateur opérationnel 5,un transistor NPN 57,des résistances de limitation de courant R4,R9,et un thyristor de puissance I9.

BAD ORIGINAL

I6.Dispositif selon la revendication I5,caractérisé en ce qu'il est disposé en série sur le circuit d'alimentation 60,du régulateur de tension I4,de l'alternateur I.

I7.Dispositif selon l'une des revendications I5 ou I6,caractérisé en ce qu'il constitue un circuit intégré 6I,à lui seul.

I8.Dispositif selon la revendication I7,caractérisé en ce que le circuit intégré 6I,est pourvu d'un convecteur calorifique 62.

I9.Dispositif selon l'une quelconque des revendications I5 et I6,caractérisé en ce qu'il constitue un circuit à couche épaisse à lui seul.

20.Dispositif selon la revendication I9,caractérisé en ce que le circuit à couche épaisse est pourvu d'un moyen de dissipation calorifique 65.

2I.Dispositif selon l'une quelconque des revendications I5 à 20,caractérisé en ce qu'il est intégré parmi les composants de régulateur de tension I4.

22.Dispositif selon l'une quelconque des revendications I5 à 2I,caractérisé en ce qu'il est intégré parmi les composants de l'alternateur I.

FIG. 1

8
9
16
+
R1
R3
R2
R4
26
2
5
7
6
3
4
17
18
19
20
21
22
23
1
25
24
30
29
60
27
11
10
12
13
14
15
28
-

FIG. 2

8
9
-
R2
R1
R3
R4
18
3
5
17
2
7
6
26
22
20
19
21
1
23
24
25
30
29
60
27
10
11
12
13
14
15
28
+

FIG. 3

FIG. 4

16
+
R1
R5
R2
17
2
-
31
33
32
32 a
35
36
37
31 a
34
19
38

FIG. 5
FIG. 6
R1
R2
R3
R4
R6
R7
FIG. 7
R1
R2
R3
R8
FIG. 8
IN
OUT

FIG. 9

8
9
16
R1
R2
R3
17
18
55
26
2
3
5
6
56
57
58
59
R4
19
21
20
73
R9
22
60
15
1
25
23
24
14
11
10
12
13
29
30
28
27

FIG 10

FIG 11

62
61
64
63
66
8
9
67
65
68

FIG. 12

72
74
70
71
69

0038231

Numéro de la demande

Office européen des brevets

# RAPPORT DE RECHERCHE EUROPEENNE

EP 81 40 0422

| Catégorie | DOCUMENTS CONSIDERES COMME PERTINENTS — Citation du document avec indication, en cas de besoin, des parties pertinentes | Revendication concernée |
|---|---|---|
| | FR - A - 695 982 (M. POURLIER)<br>* En entier * | 1 |
| | FR - A - 2 198 292 (THE LUCAS ELECTRICAL CO.)<br>* Page 1, ligne 35 à page 5, ligne 36; figures 1,2,3 * | 1,2,9, 14,15 |
| | FR - A - 2 127 823 (MOTOROLA)<br>* Page 1, lignes 1-4; page 2, ligne 35 à page 3, ligne 36; figure 1 * | 1,2,15 |
| | US - A - 3 789 269 (J.A. HOLM et al.)<br>* Colonne 3, ligne 4 à colonne 6, ligne 59; figure * | 1,9, 11, 14-16 |
| | US - A - 4 136 311 (R.E.SCHEIDLER)<br>* Colonne 1, ligne 60 à colonne 4, ligne 15; figure * | 1,4,15 |
| | FR - A - 2 380 656 (S.E.V. MARCHAL et S.E.V. ALTERNATEURS)<br>* Page 5, ligne 3 à page 7, ligne 25; figure 1 * | 2,10, 11,15 |
| | FR - A - 2 174 660 (S.E.V. MARCHAL et S.E.V. ALTERNATEURS)<br>./. | 5,6 |

CLASSEMENT DE LA DEMANDE (Int. Cl.[3])

H 02 J 7/16
7/24

DOMAINES TECHNIQUES RECHERCHES (Int. Cl.[3])

H 02 J 7/16
7/24
7/14
B 60 R 16/02

CATEGORIE DES DOCUMENTS CITES

- X: particulièrement pertinent
- A: arrière-plan technologique
- O: divulgation non-écrite
- P: document intercalaire
- T: théorie ou principe à la base de l'invention
- E: demande faisant interférence
- D: document cité dans la demande
- L: document cité pour d'autres raisons
- &: membre de la même famille, document correspondant

☒ Le présent rapport de recherche a été établi pour toutes les revendications

| Lieu de la recherche | Date d'achèvement de la recherche | Examinateur |
|---|---|---|
| La Haye | 09-06-1981 | POINT |

0038231

Numéro de la demande

Office européen des brevets

# RAPPORT DE RECHERCHE EUROPEENNE

EP 81 40 0422

-2-

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | * Page 4, ligne 16 à page 5, ligne 17; figures 1,2 *<br>-- | | |
| | FR - A - 2 007 084 (NIPPON DENSO)<br>* Page 1, lignes 1-6; page 2, ligne 35 à page 3, ligne 32; page 4, lignes 33-39; figures 1,2,3 *<br>-- | 17,18 | |
| | FR - A - 2 216 703 (SIEMENS)<br>* Page 3, lignes 11-29; page 5, ligne 35 à page 7, ligne 4, figures 2,3,4 *<br>---- | 19,20 | DOMAINES TECHNIQUES RECHERCHES (Int. Cl. 3) |